# EUROPEAN PATENT SPECIFICATION

(11) **EP 2 337 319 B1**
(45) Date of publication and mention of the grant of the patent: **08.03.2017**
(21) Application number: 09179700.1
(22) Date of filing: 17.12.2009
(51) Int. Cl.: H04M 1/2745

(54) **METHOD FOR PROVIDING EXTENSION LIST SELECTION**
VERFAHREN ZUR BEREITSTELLUNG EINER NEBENSTELLENLISTENAUSWAHL
PROCÉDÉ POUR FOURNIR UNE SÉLECTION DE LISTE D'EXTENSION

(43) Date of publication of application: 22.06.2011
(73) Proprietor: BlackBerry Limited, Waterloo, ON N2K 0A7 (CA)
(72) Inventor: Maamoun, Mohamed Mahmoud, Kanata Ontario K2K 3K1 (CA)
(74) Representative: Moore, Barry

(56) References cited:
- WO-A1-2006/052178
- WO-A2-03/049460
- Kevin Michaluk: "Quick Tip: Inserting an X for Dialing Extension When Saving Contact Info", , 31 August 2009 (2009-08-31), XP055151831, Retrieved from the Internet: URL:http://crackberry.com/quick-tip-using- x-extension-when-saving-contact-info-addin g-wait-be-prompted [retrieved on 2014-11-10]

## Description

The present disclosure relates generally to mobile communication devices. More particularly, the present disclosure relates to a method for providing wait extension list selection.

Mobile communication device use has grown and continues to grow with the continued implementation of new technologies. A mobile communication device can provide different functionality such as a phone, a camera, a music player or data storage capacity for use with an address book application, a calendar application or an email application.

In order to keep track of all of their contacts, users are able to store contact information concerning different individuals in the mobile communication device address book. This contact information can include the individual's home address, work address, mobile phone number, email address and work phone number including extension.

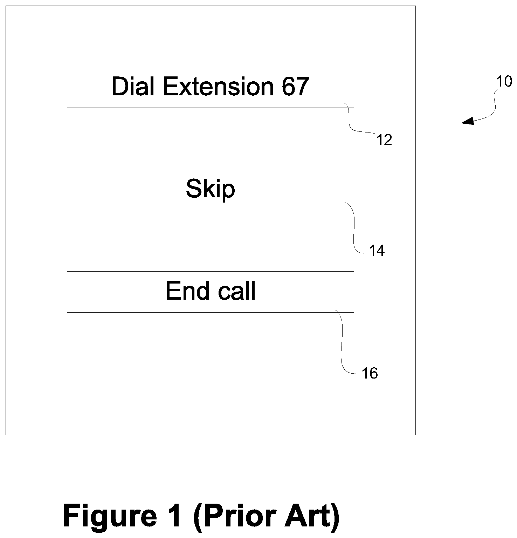

Currently, when a user calls an individual's number, and assuming there is an extension associated with this number, after the number is dialed, a dialog screen 10 is presented to the user (as shown in Figure 1) which allows the user to either dial the extension via button 12, skip the extension entry via button 14 or end the call via button 16. If the user selects button 12 to dial the extension, selection of this button causes the mobile communication device to automatically dial the extension for the user.

It is, therefore, desirable to provide an improved method and apparatus for providing extension list selection.

WO 03/049460 A2 discloses a system and method for mobile stations for enhancing the ease of use of a mobile station. Through the system and method, a user may more easily view the phone number of a caller identification card. The user may be alerted when the user tries to send messages whilr out of GPRS coverage, or the mobile station may recognize extension numbers in address book user interface applications to assist with a dialing operation.

WO 2006/052178 A1 discloses a method for establishing a call from a calling party to an extension of a PBX. By providing the calling party with a graphical display of information of extension of the PBX the user may easy and fast select a desired extension.

### GENERAL

The present disclosure is directed generally at a method and apparatus for providing extension list selection and dialing. When multiple extensions are associated with a single telephone number of address book entry are stored within a mobile communication device address book, they can then be presented to a user after the telephone number is dialed.

In a first aspect, the present disclosure may provide a method of providing extension list dialing in a mobile communication device comprising: storing a plurality of extensions within a single address book entry; sensing dialing of a phone number associated with the single address book entry; sensing connection between the mobile communication device and a telephony apparatus associated with the phone number to establish a call; and displaying a screen dialog with each of the plurality of extensions and a name associated with each of the plurality of extensions for selection of one of the plurality of extensions.

In a second aspect, the present disclosure may provide apparatus for providing extension list dialing in a mobile communication device comprising: a processor; a database storing at least one address book entry with multiple extensions; a display adapted to display a screen dialog with each of the multiple extensions and a name associated with each of the multiple extensions for selection of one of the multiple extensions after the processor has connected a call between the mobile communication device and a telephony apparatus associated with the at least one address book entry

Other aspects and features of the present disclosure will become apparent to those ordinarily skilled in the art upon review of the following description of specific implementations of the disclosure in conjunction with the accompanying figures.

### BRIEF DESCRIPTION OF THE DRAWINGS

Implementations of the present disclosure will now be described, by way of example only, with reference to the attached Figures, wherein:
Figure 1 is a schematic diagram of a prior art screen dialog for use in dialing an extension with a mobile communication device;
Figure 2 is a schematic diagram of a mobile communication device;

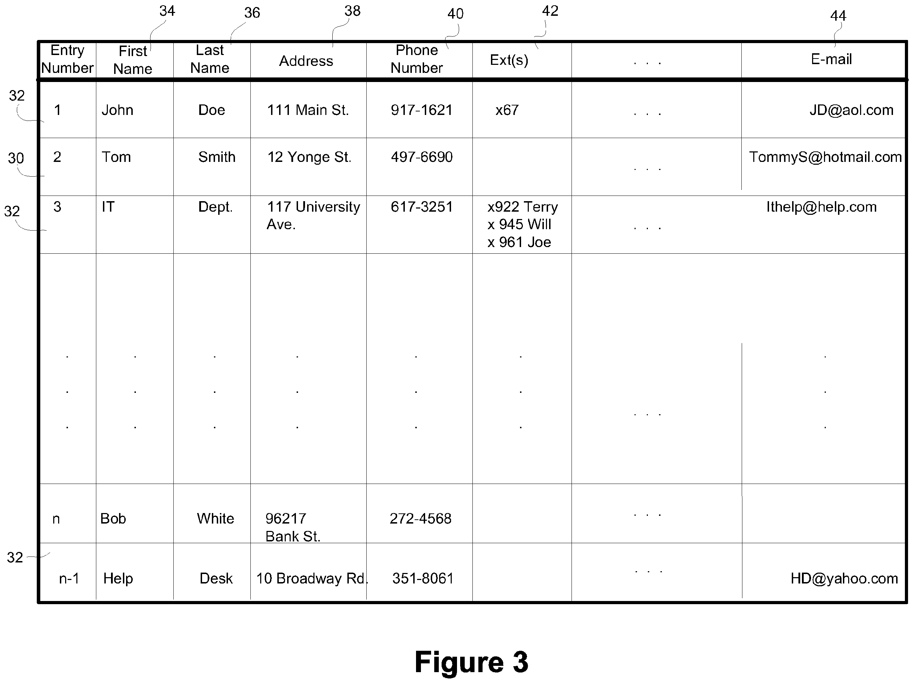

Figure 3 is a schematic diagram of a database storing entries for a mobile communication device address book;
Figure 4 is a schematic diagram of a screen dialog for use in extension list selection;
Figure 5 is a schematic diagram of a second screen dialog for use in extension list selection;
Figure 6 is a flowchart outlining a method of extension list dialing; and
Figure 7 is a schematic diagram of a mobile communication device.

### DESCRIPTION OF PREFERRED EMBODIMENTS

Generally, the present disclosure provides a system and method for providing extension list dialing.

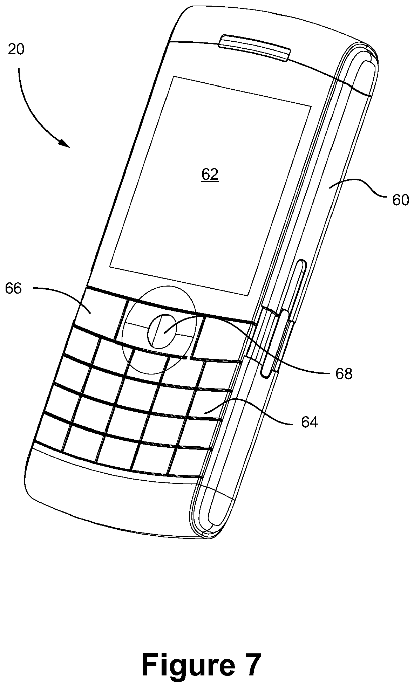

Turning to Figure 7, a perspective view of a mobile communication device is shown. The mobile communication device 20 has a body 60 which includes a display screen 62, a keyboard/keypad 64, a set of buttons 66 and a trackball 68. It will be understood that the trackball 68 can also be a joystick, scroll wheel, roller wheel, trackball or touchpad or the likes, or another button. As will be further understood by one skilled in the art, the device 20 includes other parts which are not shown or described.

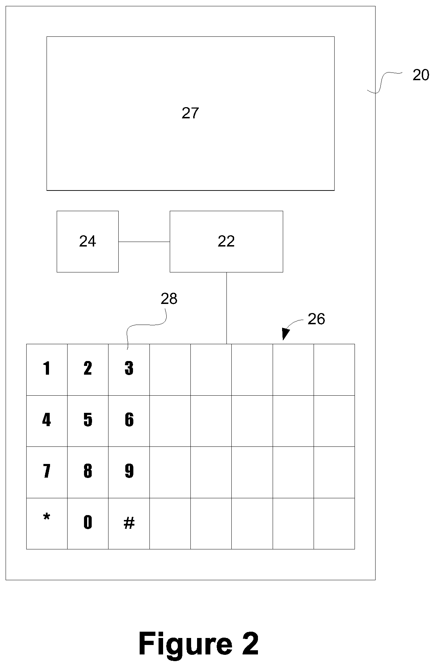

Turning to Figure 2, a schematic diagram of the mobile communication device for use with a system and method for providing extension list dialing is shown. The mobile communication device 20 further includes a processor 22, a database 24, a keyboard 26 and a display 27. The keyboard 26 preferably includes a keypad portion 28 or the capability for the user to use the keyboard 26 to dial a telephone number. Although shown as being external to the processor 22, the database 24 can also be located within

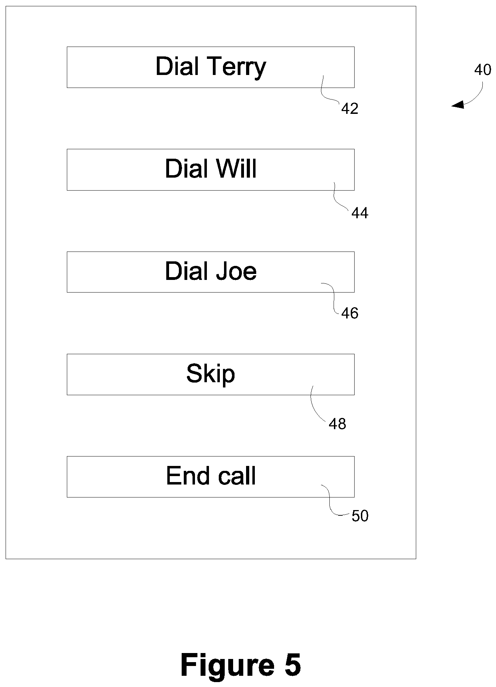

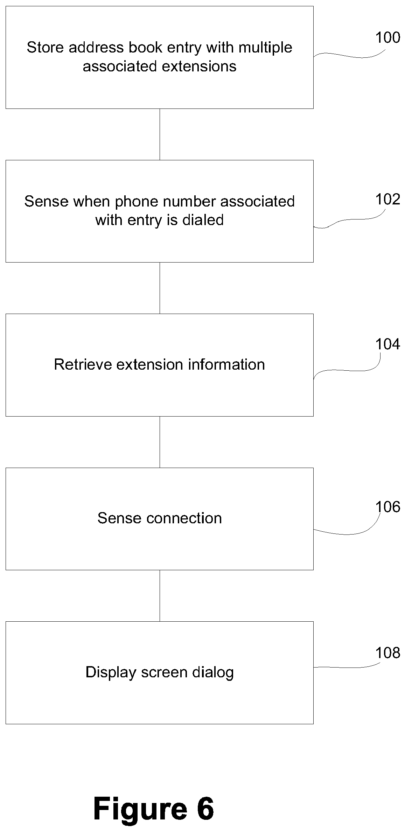

In yet a further implementation, both x and ww delimiters can be used in a single address book entry. Use of x delimiters will be understood by one skilled in the art. The "w" is used and understood by most communication devices to provide the screen dialog of Figure 1 and therefore the "ww" can be used to instruct the mobile device to display a list of all associated extensions. For instance, with the entry {617 3251x 67 ww "Terry" 922 ww "Will" 945 ww "Joe" 961}, Figure 1 would be initially displayed to the user and if the user selects the Dial Extension 67 button 12, a second screen dialog, such as Figure 5 or 6 is then displayed. Currently, the inclusion of the letter x in an address book entry prompts the device to display the screen or wait dialog.

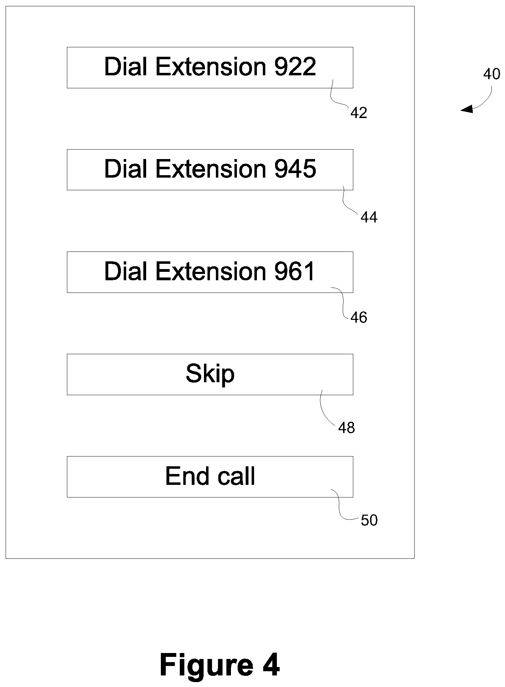

Turning to Figure 4, a schematic diagram of a screen dialog in accordance with an implementation of a system for providing a wait extension list selection dialog is shown. The screen dialog is associated with the table 30. In operation, after the user has dialed the number associated with entry 3 (617-3251) and a connection is established, the screen dialog 40 is shown. The user can then select which member of the IT Dept. to contact. For instance, the user can select extension 922 for Terry (button or option 42), extension 945 for Will (button or option 44), extension 961 for Joe (button or option 46), by-pass or skip the extension entering (button or option 48) or end the call (button or option 50). Alternatively, as shown in Figure 5, the names of the individuals associated with the extensions is shown instead of the extension so that the user recognizes whom he/she is trying to contact. As shown in Figure 5, the user can select Terry (button 42), Will (button 44), Joe (button 46), by-pass or skip the extension entering (button 48) or end the call (button 50).

Although listed as buttons, this is for mobile devices where the display is a touch screen. In an alternative implementation, the extensions or names are listed and can be selected via use of the trackball or keyboard using known methods.

Turning to Figure 6, a flowchart outlining a method of providing extension list dialing or selection is shown. Firstly, an address book entry is entered 100 into the mobile communication device address book whereby the address book entry includes at least two different extensions associated with a telephone number. When the processor 22 senses 102 that the phone number associated with the address book entry is dialed, the processor 22 accesses 104 the database 24 to retrieve the extension information. After a connection is established between the mobile communication device and the telephony apparatus of the dialed number and the connection sensed 106 by the processor, the screen dialog 40 is then displayed 108 to the user on the display 27. The user can then select the desired extension and is connected by the telephony apparatus.

Implementations of the disclosure can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform a method according to an implementation of the disclosure. Those of ordinary skill in the art will appreciate that other instructions and operations necessary to implement the described disclosure can also be stored on the machine-readable medium. Software running from the machine-readable medium can interface with circuitry to perform the described tasks.

The above-described implementations of the disclosure are intended to be examples only. Alterations, modifications and variations can be effected to the particular implementations by those of skill in the art without departing from the scope of the disclosure, which is defined solely by the claims appended hereto.

## Claims

1. A method of providing extension list dialing in a mobile communication device (20) having a processor, database and display, the method comprising:
storing a plurality of extensions within a single address book entry (32) associated with a telephone number, and additionally storing for each of the extensions a name of the individual associated with the extension;
the processor sensing dialing of a phone number associated with the single address book entry (32);
the processor sensing an establishment of a connection between the mobile communication device (20) and a telephony apparatus associated with the phone number; and
after sensing the establishment of the connection, displaying a screen dialog (40) with each of the plurality of extensions and a name associated with each of the plurality of extensions for selection of one of the plurality of extensions.

2. The method of Claim 1 wherein sensing connection between the mobile communication device (20) and the telephony apparatus associated with the phone number further comprises:
retrieving extension information associated with the single address book entry (32).

3. The method of Claim 1 or Claim 2 wherein storing a plurality of extensions comprises:
storing the plurality of extensions with delimiters in the address book entry (32).

4. The method of Claim 1 further comprising:
retrieving the single address book entry (32) having the plurality of extensions after sensing dialing of the phone number associated with the single address book entry (32); and
determining a number of extensions by searching for delimiters in the single address book entry (32) before displaying the screen dialog (40).

5. The method of any one of the preceding Claims wherein displaying a screen dialog (40) further comprises displaying an option for skipping extension entering.

6. The method of any one of the preceding Claims wherein displaying a screen dialog (40) further comprises displaying an option for ending the call.

7. The method of any one of the preceding Claims wherein displaying a screen dialog (40) further comprises displaying each of the plurality of extensions in a list.

8. The method of any one of Claims 3 or 4 wherein the term "ww" or the term "x" is used as the delimiter.

9. Apparatus for providing extension list dialing in a mobile communication device (20) comprising:
a processor (22);
a database (24) storing at least one address book entry (32) with multiple extensions;
a display (27) adapted to display a screen dialog (40) with each of the multiple extensions and a name associated with each of the multiple extensions for selection of one of the multiple extensions after the processor (22) has sensed an establishment of connection between the mobile communication device (20) and a telephony apparatus associated with the at least one address book entry (32).

10. The apparatus of Claim 9 wherein the database (24) is located within the processor (22).

11. The apparatus of Claim 9 or Claim 10 wherein the database (24) comprises a table (30) for storing the at least one address book entry (32).

12. The apparatus of Claim 11 wherein the table (30) comprises an extension section for each of the at least one address book entries (32).

13. A computer-readable medium storing computer-readable instructions executable by a processor (22) of a computing device to cause the device to implement the steps of the method of claims 1 to 8.

## Patentansprüche

1. Verfahren zur Bereitstellung von Nebenstellenlistenanrufen in einem mobilen Kommunikationsgerät (20), das einen Prozessor, eine Datenbank und eine Anzeige aufweist, wobei das Verfahren umfasst:
Speichern von mehreren mit einer Telefonnummer verknüpften Nebenstellen in einem einzigen Adressbucheintrag (32) und zusätzlich Speichern eines Namens der mit der Nebenstelle verknüpften Person für jede der Nebenstellen;
Erfassen der Anwahl einer mit dem einzelnen Adressbucheintrag (32) verknüpften Telefonnummer durch den Prozessor;
Erfassen der Herstellung einer Verbindung zwischen dem mobilen Kommunikationsgerät (20) und einem mit der Telefonnummer verknüpften Telefonapparat durch den Prozessor; und
nach dem Erfassen der Herstellung der Verbindung, Anzeigen eines Bildschirmdialogs (40) mit jeder der mehreren Nebenstellen und einem mit jeder der mehreren Nebenstellen verknüpften Namen zur Auswahl einer der mehreren Nebenstellen.

2. Verfahren nach Anspruch 1, wobei das Erfassen der Verbindung zwischen dem mobilen Kommunikationsgerät (20) und dem mit der Telefonnummer verknüpften Telefonapparat ferner umfasst:
Abrufen von mit dem einzelnen Adressbucheintrag (32) verknüpften Nebenstelleninformationen.

3. Verfahren nach Anspruch 1 oder Anspruch 2, wobei das Speichern mehrerer Nebenstellen umfasst:
Speichern der mehreren Nebenstellen mit Trennzeichen in dem Adressbucheintrag (32).

4. Verfahren nach Anspruch 1, das ferner umfasst:
Abrufen des einzelnen Adressbucheintrags (32), der die mehreren Nebenstellen aufweist, nach dem Erfassen der Anwahl der mit dem einzelnen Adressbucheintrag (32) verknüpften Telefonnummer; und
Bestimmen einer Anzahl von Nebenstellen durch Suchen nach Trennzeichen in dem einzelnen Adressbucheintrag (32) vor dem Anzeigen des Bildschirmdialogs (40).

5. Verfahren nach einem der vorhergehenden Ansprüche, wobei das Anzeigen eines Bildschirmdialogs (40) ferner das Anzeigen einer Option zum Überspringen der Nebenstelleneingabe umfasst.

6. Verfahren nach einem der vorhergehenden Ansprüche, wobei das Anzeigen eines Bildschirmdialogs (40) ferner das Anzeigen einer Option zum Beenden des Anrufs umfasst.

7. Verfahren nach einem der vorhergehenden Ansprüche, wobei das Anzeigen eines Bildschirmdialogs (40) ferner das Anzeigen einer jeden der mehreren Nebenstellen in einer Liste umfasst.

8. Verfahren nach einem der Ansprüche 3 oder 4, wobei der Ausdruck "ww" oder der Ausdruck "x" als das Trennzeichen benutzt wird.

9. Vorrichtung zur Bereitstellung von Nebenstellenlistenanrufen in einem mobilen Kommunikationsgerät (20), die umfasst:
einen Prozessor (22);
eine Datenbank (24, die mindestens einen Adressbucheintrag (32) mit mehreren Nebenstellen speichert;
eine Anzeige (27), die dazu angepasst ist, einen Bildschirmdialog (40) mit jeder der mehreren Nebenstellen und einem mit jeder der mehreren Nebenstellen verknüpften Namen zur Auswahl von einer der mehreren Nebenstellen anzuzeigen, nachdem der Prozessor (22) die Herstellung einer Verbindung zwischen dem mobilen Kommunikationsgerät (20) und einem mit dem mindestens einen Adressbucheintrag (32) verknüpften Telefonapparat erfasst hat.

10. Vorrichtung nach Anspruch 9, wobei sich die Datenbank (24) in dem Prozessor (22) befindet.

11. Vorrichtung nach Anspruch 9 oder Anspruch 10, wobei die Datenbank (24) eine Tabelle (30) zum Speichern des mindestens einen Adressbucheintrags (32) umfasst.

12. Vorrichtung nach Anspruch 11, wobei die Tabelle (30) einen Nebenstellenbereich für jeden der mindestens einen Adressbucheinträge (32) umfasst.

13. Computerlesbares Medium, das computerlesbare Anweisungen speichert, die von einem Prozessor (22) eines Datenverarbeitungsgeräts ausgeführt werden können, um zu bewirken, dass das Gerät die Schritte des Verfahrens von Anspruch 1 bis 8 implementiert.

## Revendications

1. Procédé de fourniture d'une numérotation sur liste de postes sur un dispositif de communication mobile (20) comprenant un processeur, une base de données et un écran d'affichage, le procédé comprenant les étapes consistant à :
enregistrer une pluralité de postes dans un enregistrement unique de carnet d'adresses (32) associé à un numéro de téléphone et en outre enregistrer pour chacun des postes un nom de la personne associée au poste ;
détecter par le processeur la numérotation d'un numéro de téléphone associé à l'enregistrement unique de carnet d'adresse (32) ;
détecter par le processeur l'établissement d'une connexion entre le dispositif de communication mobile (20) et un appareil téléphonique associé au numéro de téléphone ; et
après détection de l'établissement de la connexion, afficher un dialogue à l'écran (40) avec chaque poste parmi la pluralité de postes et un nom associé à chaque poste parmi la pluralité de postes, pour la sélection d'un poste parmi la pluralité de postes.

2. Procédé selon la revendication 1, dans lequel l'étape de détection de la connexion entre le dispositif de communication mobile (20) et l'appareil téléphonique associé au numéro de téléphone comprend en outre l'étape consistant à :
obtenir des informations de poste associées à l'enregistrement unique de carnet d'adresse (32).

3. Procédé selon la revendication 1 ou la revendication 2, dans lequel l'étape d'enregistrement d'une pluralité de postes comprend l'étape consistant à :
enregistrer la pluralité de postes avec des délimiteurs dans l'enregistrement de carnet d'adresse (32).

4. Procédé selon la revendication 1, comprenant en outre les étapes consistant à :
obtenir l'enregistrement unique de carnet d'adresse (32) possédant la pluralité de postes après avoir détecté la numérotation du numéro de téléphone associé à l'enregistrement unique de carnet d'adresse (32) ; et
déterminer un nombre des postes en recherchant des délimiteurs dans l'enregistrement unique de carnet d'adresse (32) avant d'afficher le dialogue à l'écran (40).

5. Procédé selon l'une quelconque des revendications précédentes, dans lequel l'étape d'affichage d'un dialogue à l'écran (40) comprend en outre l'étape consistant à afficher une option pour ignorer la saisie du poste.

6. Procédé selon l'une quelconque des revendications précédentes, dans lequel l'étape d'affichage d'un dialogue à l'écran (40) comprend en outre l'étape consistant à afficher une option pour interrompre l'appel.

7. Procédé selon l'une quelconque des revendications précédentes, dans lequel l'étape d'affichage d'un dialogue à l'écran (40) comprend en outre l'étape consistant à afficher chacun des postes parmi la pluralité de postes sous la forme d'une liste.

8. Procédé selon l'une quelconque des revendications 3 et 4, dans lequel le terme 'ww' ou le terme 'x' est utilisé comme délimiteur.

9. Appareil destiné à fournir une numérotation sur liste de postes sur un dispositif de communication mobile (20), comprenant :
un processeur (22) ;
une base de données (24) stockant au moins un enregistrement de carnet d'adresse (32) avec des postes multiples ;
un écran d'affichage (27) conçu pour afficher un dialogue à l'écran (40) avec chacun des postes multiples ainsi qu'un nom associé à chacun des postes multiples pour la sélection de l'un des postes multiples après que le processeur (22) a détecté l'établissement de la connexion entre le dispositif de communication mobile (20) et un appareil téléphonique associé audit au moins un enregistrement de carnet d'adresse (32).

10. Appareil selon la revendication 9, dans lequel la base de données (24) est située au sein du processeur (22).

11. Appareil selon la revendication 9 ou la revendication 10, dans lequel la base de données (24) comprend une table (30) pour le stockage dudit au moins un enregistrement de carnet d'adresse (32).

12. Appareil selon la revendication 11, dans lequel la table comprend une section de postes pour chacun desdits au moins un enregistrement de carnet d'adresse (32).

13. Support lisible par ordinateur portant des instructions lisibles par ordinateur qui peuvent être exécutées par un processeur (22) d'un dispositif informatique afin de commander au dispositif de mettre en oeuvre les étapes du procédé selon les revendications 1 à 8.
